Europäisches Patentamt

European Patent Office

Office européen des brevets

(11) Numéro de publication: **0 334 292**
**A1**

## (12) DEMANDE DE BREVET EUROPEEN

(21) Numéro de dépôt: 89105042.9

(22) Date de dépôt: 21.03.89

(51) Int. Cl.4: **C01F 11/46 , D21H 5/18 , C09C 1/02 , C04B 14/38**

Le titre de l'invention a été modifié (Directives relatives à l'examen pratiqué à l'OEB, A-III, 7.3)

(30) Priorité: 24.03.88 FR 8804338

(43) Date de publication de la demande:
27.09.89 Bulletin 89/39

(84) Etats contractants désignés:
AT BE CH DE ES GB GR IT LI NL SE

(71) Demandeur: **PLATRES LAFARGE SA**
**5, Avenue de l'Egalité**
**F-84800 l'Isle-sur-Sorgue(FR)**

(72) Inventeur: **Petit, Alain**
**Lotissement Saint Joseph 11 rue Mozart**
**F-26200 Montelimar(FR)**

(74) Mandataire: **Eggert, Hans-Gunther, Dr.**
**Räderscheidtstrasse 1**
**D-5000 Köln 41(DE)**

(54) Procédé de préparation de sulfate de calcium dihydraté à structure cristalline longiligne dotée d'une longueur et d'un facteur de forme maitrisés.

(57) Procédé de préparation de sulfate de calcium dihydraté ayant l'aspect de structures cristallines longilignes à partir de sulfate de calcium semihydraté, de variété "$\beta$" et/ou "$\alpha$" qui se caractérise en ce que, dans le but de les doter d'une longueur et d'un facteur de forme maîtrisés, il comprend :

a) le broyage et/ou la sélection dudit sulfate de calcium semihydraté selon une granulométrie choisie telle que la coupe granulométrique spécifique pour l'obtention des structures cristallines longilignes de longueur et de facteur de forme préalablement fixés, appartienne au domaine délimité par les bornes 5 micromètres et 200 micromètres,

b) la présence d'au moins un agent régulateur de recristallisation, à raison de 0,01 à 6,66 pour cent en poids, par rapport à la masse totale de la suspension à former dans l'étape c,

c) la formation par dispersion à partir des matériaux des étapes a et b d'une suspension aqueuse à une température de transformation isothermique fixée au plus égale à 60°C, ayant une teneur en matière sèche d'au plus 33,33 pour cent en poids par rapport à la masse totale de la suspension,

d) le maintien de la température à la valeur fixée pendant un temps d'au plus 60 minutes et,

e) éventuellement la séparation des structures cristallines longilignes à longueur et à facteur de forme maîtrisés.

Les structures cristallines longilignes obtenues selon le procédé sont destinées plus spécialement à des domaines d'application aussi divers que ceux du papier, de la peinture et des matières plastiques.

## PROCEDE DE PREPARATION DE SULFATE DE CALCIUM A STRUCTURE CRISTALLINE LONGILIGNE DOTEE D'UNE LONGUEUR ET D'UN FACTEUR DE FORME MAITRISES

### DOMAINE DE L'INVENTION

L'invention concerne un procédé de préparation de sulfate de calcium dihydraté ayant l'aspect de structures cristallines longilignes, dotées d'une longueur et d'un facteur de forme maîtrisés, et les structures cristallines longilignes obtenues.

Telle qu'elle est utilisée l'expression **"structure cristalline longiligne"** désigne le domaine constitué par les cristaux individualisés se présentant sous l'aspect d'aiguilles ou bien constitué par lesdits cristaux associés au plus trois à trois selon leur grand axe, par recouvrement partiel.

De même, l'expression **"facteur de forme"** entend définir le rapport dimensionnel existant entre la longueur du cristal individuel ou des cristaux associés au plus trois à trois et leur plus grand diamètre.

### ARRIERE-PLAN DE L'INVENTION

Depuis longtemps, la littérature spécialisée a largement décrit les diverses formes chimiques et cristallines du sulfate de calcium.

Les formes chimiques les plus communément connues sont le sulfate de calcium dihydraté de formule $CaSO4,2H2O$ dénommé gypse dans le règne minéral, qu'il soit d'origine naturelle ou synthétique (tel que phosphogypse, désulfogypse ou gypse provenant de neutralisation chimique) ; le sulfate de calcium semihydraté de formule $CaSO4,1/2\ H^2O$ résultant du traitement thermique du gypse (à sec ou en présence d'eau sous forme liquide ou vapeur) entre $90°C$ et $250°C$ ; les anhydrites I, II et III de formule $CaSO4$, l'une étant dite soluble (anhydrite III) quand le traitement est pratiqué à une température choisie dans l'intervalle $100°C$ à $250°C$, les autres étant dites insolubles quand le traitement thermique dépasse la température de $250°C$ (anhydrite II ou surcuit) ou de $1200°C$ (anhydrite I).

Hors les différentes formules chimiques qui viennent d'être évoquées, le sulfate de calcium est également identifiable par sa structure cristalline. Ainsi, il peut avoir un aspect polymorphe ou bien se présenter sous des structures cristallines distinctes telles que cubique, hexagonale, monoclinique ou clinorhombique, orthorombique.

Ces structures cristallines, au moins pour certaines d'entre elles, conduisent à des formes longilignes qui, individuellement ou associées, sont connues sous les appellations de fibres aciculaires, d'aiguilles, de trichites, de whiskers dont il est établi que le sulfate de calcium peut s'y trouver dans un état dihydraté ou semihydraté ou anhydre.

Or, selon les conditions du traitement thermique appliqué au gypse c'est-à-dire au sulfate de calcium dihydraté, pour en provoquer la déshydratation, le sulfate de calcium semihydraté résultant peut exister sous l'une ou l'autre des variétés "α" (traitement thermique sous pression de vapeur d'eau au moins égale à la pression atmosphérique) ou "β" (traitement thermique à pression atmosphérique), ces deux variétés se distinguant l'une de l'autre par des différences, par exemple de masse volumique (variété "α", environ 2,75 $g/cm^3$ et variété "β" environ 2,60 $g/cm^3$), de chaleur d'hydratation, de température de transformation chimique ou autre.

D'une manière générale, la variété "β" du semihydrate est la plus privilégiée des deux variétés car, obtenue grâce à des procédés continus de déshydratation, elle est industriellement rendue attractive par son faible coût de production et est, dès lors, très largement utilisée pour la fabrication du plâtre. Mais cette variété "β" du semihydrate n'est généralement pas encline à disposer d'une longueur et d'un facteur de forme maîtrisés et, dès lors est démunie d'intérêt pour certaines applications.

Toutefois, la variété "α" du semihydrate , bien qu'elle soit produite en général par des procédés discontinus plus complexes et coûteux, n'est pas dénuée d'intérêt car, outre de nombreuses propriétés bien connues de l'homme de l'art, elle est reconnue pouvoir détenir un facteur de forme (dont la variété "β" est le plus souvent dépourvue) propice à des emplois spécifiques puisqu'elle peut être obtenue sous l'aspect d'une structure cristalline longiligne.

Tout l'intérêt d'une telle structure est perçu dès lors qu'elle est mise en oeuvre dans des domaines industriels où cette particularité l'autorise à jouer, par exemple, un rôle de renfort (dans les matériaux de construction tels que poutres, gaines, planchers ...) ou un rôle de charge (dans les matériaux polymères par exemple) pour en améliorer les caractéristiques mécaniques.

C'est pourquoi la variété "α" du semihydrate, munie d'un facteur de forme, est à l'origine de nombreux procédés et produits, chaque procé dé, comme le montre la littérature, voulant apporter sa contribution à la maîtrise des conditions d'obtention de telle ou telle structure cristalline longiligne et des caractéristiques dimensionnelles de ces structures. .

Un premier type de procédé consiste à traiter thermiquement du gypse, sous pression en milieu aqueux, pour le transformer, le plus souvent en présence de différentes substances, en sulfate de calcium semihydraté de variété "α", muni d'un facteur de forme.

Un tel procédé, destiné à la production de fibres du type trichite et illustré par le brevet français FR 2,179,760, réside en un traitement thermique sous pression d'une suspension aqueuse de sulfate de calcium dihydraté à une température comprise entre 105°C et 150°C jusqu'à la formation desdites fibres du type sulfate de calcium semihydraté de variété "α". Ces fibres, une fois formées, sont recueillies à chaud et stabilisées pour éviter une réhydratation destructive du facteur de forme, la stabilisation se faisant soit par une calcination, soit encore par un traitement au moyen d'un agent imperméabilisant, tel que hydrolisats de protéines, polymères d'acides polycarboxyliques ou autres polymères (brevets allemands DE 2,702,097 et DE 2,702,100).

Un autre procédé relevant de ce premier type de traitement (brevet français FR 2,415,077) conseille, dans le but de produire des fibres de sulfate de calcium semihydraté de variété "α" , d'introduire dans la suspension aqueuse de gypse un agent dispersant (tel que tanin ou acide tanique). Après cet ajout, le traitement est effectué sous pression de vapeur d'eau à une température de l'ordre de 120°C pendant au moins une heure.

A la fin de ce traitement, les fibres de variété "α" obtenues, sont séparées, nécessairement séchées (à environ 400°C) et éventuellement calcinées (à environ 600°C) pour les stabiliser.

Mais si la vocation de ce premier type de procédé est essentiellement l'obtention de sulfate de calcium semihydraté de variété "α", de structure cristalline longiligne, le produit ainsi obtenu ne peut conserver son caractère fibreux en présence d'eau qu'au prix d'une calcination coûteuse ou bien d'un revêtement protecteur qui n'est jamais totalement étanche, le rendant moins sensible au phénomène de réhydratation.

La sanction d'une mauvaise stabilisation thermique ou d'une protection incomplète par revêtement est la réhydratation de la fibre et la destruction de sa forme longiligne.

Un deuxième type de procédé, à l'inverse du premier, propose d'utiliser comme matière première, non pas du gypse, mais du sulfate de calcium semihydraté. Ce semihydrate mis en solution dans un milieu aqueux acide volontairement exempt de germes cristallins est transformé en fibres de sulfate de calcium dihydraté jouissant d'un facteur de forme longiligne grâce au refroidissement lent de ladite solution jusqu'à lui faire atteindre, mais sans aller au-delà, la concentration de saturation permettant d'initier la cristallisation.

Un procédé discontinu relevant de ce deuxième type est décrit dans le brevet français FR 2,377,970 qui propose la préparation en un milieu acide de monocristaux (whiskers) de sulfate de calcium hydraté disposant d'un facteur de forme.

Ce procédé consiste à mettre en oeuvre une solution aqueuse acide (pH < 4) de sulfate de calcium, portée à une température comprise entre 75°C et 100°C et débarrassée de tout germe cristallin. Puis ladite solution chaude est lentement refroidie en un temps supérieur à 70 minutes, à une température comprise entre 65°C et 40°C jusqu'à atteindre la concentration de saturation. Dès lors que cette concentration est atteinte, le refroidissement est poursuivi jusqu'à l'obtention des monocristaux aciculaires de sulfate de calcium dihydraté qui sont séparés et séchés selon les méthodes connues.

Un tel procédé, quand il est mis en oeuvre, exige un savoir-faire important qui rend son exploitation critique, faisant douter de son caractère industriel. En effet non seulement la solution acide et chaude de sulfate de calcium doit être exempte de tout germe cristallin , mais encore ladite solution doit être refroidie d'une manière telle qu'elle ne soit jamais placée dans un état de sursaturation qui occasionnerait l'apparition perturbante d'agrégats polycristallins (en forme d'étoiles) ou de cristaux (en forme d'écailles), en même temps que celle des monocristaux aciculaires souhaités.

Enfin un troisième type de procédé se distingue de ceux précités par le fait essentiel qu'il transforme d'une manière isothermique la matière initiale (sulfate de calcium) en fibres de sulfate de calcium dihydraté, dotées d'un facteur de forme.

Un procédé de ce type, décrit dans le brevet français FR 2, 395, 965 prépare des fibres minérales ayant une longueur d'au moins 200 micromètre`s et disposant d'un facteur de forme en transformant du sulfate de calcium dans des solutions aqueuses acides ou salines, de manière isothermique, à une température préférentiellement choisie autour de 100°C en présence d'une phase solide.

Quand le procédé est préférentiellement pratiqué en un milieu salin, les solutions salines mises en oeuvre (mais préalablement préparées) sont très concentrées, leur concentration pouvant atteindre des valeurs aussi élevées que 30 pour cent en poids. De telles concentrations peuvent rendre rédhibitoire l'exploitation industrielle dudit procédé.

De plus, qu'il soit pratiqué en un milieu acide et/ou salin, ce procédé peut être à l'origine de graves phénomènes de corrosion, qui nécessitent pour les combattre des installations complexes et beaucoup plus coûteuses.

En outre, ce procédé présente l'inconvénient majeur de nécessiter un niveau de température élevé, et malgré cela, des temps de préparation des fibres qui sont longs, se situant pratiquement entre 2 heures et au mieux 10 minutes. Car à partir d'une solution réactionnelle ayant une concentration en sulfate de calcium comprise entre 5 et 50 pour cent en poids, la formation des fibres de sulfate de calcium dihydraté se produit (isothermiquement) entre 90°C et 100°C en un temps compris entre plusieurs heures et 30 minutes, tandis que la formation des fibres de sulfate de calcium anhydre, s'effectue (isothermiquement) entre 100°C et 105°C en un temps compris entre plusieurs heures et 10 minutes. En deçà de la température de 90°C, l'allongement du temps nécessaire à la formation des fibres est tel qu'il est incompatible avec un procédé industriel.

Enfin ce procédé manifeste, selon les conditions choisies pour son exécution, des rendements réactionnels qui sont très faibles (par exemple de l'ordre de 24 pour cent).

Ainsi, bien que l'art antérieur ait préconisé, à travers la littérature spécialisée, des moyens à utiliser pour préparer à partir de sulfate de calcium des fibres minérales disposant d'un facteur de forme, ces moyens se sont souvent révélés d'application difficile à l'échelle industrielle. Car, les uns par la mise en oeuvre des procédés actuels se manifestent comme étant grands consommateurs d'énergie thermique (procédé du type 1), et par là même coûteux quand la formation des fibres s'effectue dans un milieu sous pression ; d'autres bien difficiles à exploiter car exigeant des conditions souvent critiques (procédé du type 2) ; enfin les derniers (procédé du type 3) étant non seulement consommateurs d'énergie thermique mais aussi de temps, et conduisant assez souvent à de mauvais rendements hydroréactionnels.

## SOMMAIRE DE L'INVENTION

Consciente de l'importance des inconvénients précités, la demanderesse a visé, à travers ses recherches, la création d'un procédé de préparation de sulfate de calcium dihydraté ayant l'aspect de structures cristallines longilignes dotées d'une longueur et d'un facteur de forme maîtrisés, et les structures cristallines longilignes obtenues.

Le procédé, selon l'invention, de préparation desdites structures cristallines longilignes à partir de sulfate de calcium semihydraté de variété "$\beta$" et/ou "$\alpha$" se caractérise en ce que dans le but de les doter d'une longueur et d'un facteur de forme maîtrisés, il comprend :

a) le broyage et/ou la sélection dudit sulfate de calcium semihydraté selon une granulométrie choisie telle que la coupe granulométrique spécifique pour l'obtention des structures cristallines longilignes, de longueur et de facteur de forme préalablement fixés, appartienne au domaine délimité par les bornes 5 micromètres et 200 micromètres,

b) la présence d'au moins un agent régulateur de recristallisation, à raison de 0,01 à 6,66 pour cent en poids, par rapport à la masse totale de la suspension à former dans l'étape c,

c) la formation par dispersion à partir des matériaux des étapes a et b d'une suspension aqueuse à une température de transformation isothermique fixée au plus égale à 60°C, ayant une teneur en matière sèche d'au plus 33,33 pour cent en poids par rapport à la masse totale de la suspension,

d) le maintien de la température à la valeur fixée pendant un temps d'au plus 60 minutes et,

e) éventuellement la séparation des structures cristallines longilignes à longueur et à facteur de forme maîtrisés.

## DESCRIPTION DETAILLEE DE L'INVENTION

Ainsi, le procédé selon l'invention se distingue de ceux décrits dans l'art antérieur, par le fait qu'il met en oeuvre une source de sulfate de calcium formée de particules correctement dimensionnées puisque préalablement broyées et/ou sélectionnées selon une coupe granulométrique spécifique, que la transformation isothermique s'effectue en milieu aqueux non acide, en présence d'au moins un agent régulateur de la recristallisation, et qu'enfin, la température de transformation isothermique est toujours inférieure à celles antérieurement énoncées.

Selon le procédé de l'invention, la source de matière première à mettre en oeuvre est constituée de sulfate de calcium semihydraté de variété "$\beta$" et/ou "$\alpha$", résultant du traitement thermique de gypses naturels ou synthétiques tels que phosphogypse, désulfogypse ou gypse provenant de neutralisations chimiques par les moyens connus de l'homme de l'art. Avant sa mise en oeuvre, le sulfate de calcium semihydraté est soumis à une opération de broyage et/ou de sélection de telle manière que les particules broyées et/ou sélectionnées correspondent à la coupe granulométrique spécifique définie au préalable.

Selon le choix qui est fait de la granulométrie à donner par broyage et/ou sélection au sulfate de calcium semihydraté, les structures cristallines longilignes résultant de la transformation isothermique selon l'invention, disposent de caractéristiques dimensionnelles évoluant dans le même sens que celles du sulfate de calcium semihydraté broyé et/ou sélectionné, toutes les autres conditions du procédé selon l'invention étant maintenues constantes, c'est-à-dire dans leurs valeurs initiales.

En d'autres termes, les caractéristiques dimensionnelles des structures cristallines longilignes de sulfate de calcium dihydraté, résultant du procédé selon l'invention, sont en état de corrélation avec celles du sulfate de calcium semihydraté broyé et/ou sélectionné mis en oeuvre dans ledit procédé.

En général les particules de sulfate de calcium semihydraté broyées et/ou sélectionnées ont une coupe granulométrique spécifique choisie dans le domaine délimité par les bornes 5 micromètres et 200 micromètres et préférentiellement dans le domaine délimité par les bornes 5 micromètres et 150 micromètres.

Le broyage et/ou la sélection des particules de sulfate de calcium semihydraté sont effectués par les moyens connus de l'homme de l'art, tels que par l'usage de broyeurs à marteaux, à boulets, à doigts, ou autres, en atmosphère sèche ou en atmosphère contrôlée et/ou de sélecteurs statiques ou dynamiques tels que par exemple à pales fixes, à rotors ou autres.

Dès lors, les particules de sulfate de calcium semihydraté broyées et/ou sélectionnées peuvent être mises en oeuvre, selon le procédé de l'invention, d'une manière immédiate après le broyage et/ou la sélection, ou bien après un temps de repos plus ou moins prolongé provoquant un éventement (ou vieillissement) contrôlé desdites particules bien connu de l'homme de l'art intervenant dans la maîtrise de l'amorce de la cristallisation.

Le procédé selon l'invention comporte également la présence d'au moins un agent régulateur de recristallisation ayant la propriété d'intervenir sur la cinétique de formation des structures cristallines longilignes et dès lors sur leur longueur et leur facteur de forme. L'agent régulateur de cette recristallisation peut être choisi parmi les adjuvants n'ayant pas ou peu d'influence sur le pH de la suspension aqueuse de sulfate de calcium semihydraté broyé et/ou sélectionné, en raison de leur caractère chimiquement neutre ou bien ayant une influence sur ledit pH à cause de leur caractère franchement alcalin.

Quand il est souhaitable que l'agent régulateur de recristallisation ait un caractère chimiquement neutre, pour favoriser préférentiellement la formation de structures cristallines longilignes de petites dimensions, il est généralement choisi dans le groupe constitué par les sels des métaux monovalents ou polyvalents, et préférentiellement parmi les halogénures, les sulfates, les nitrates, les silicates, les halogénosilicates de lithium, de sodium, de potassium, d'ammonium, de calcium, de magnésium, d'aluminium, seuls ou en combinaison.

Mais quand il est souhaitable que l'agent régulateur de recristallisation ait un caractère chimiquement alcalin pour favoriser préférentiellement la formation de structures cristallines longilignes de plus grandes dimensions, il est généralement choisi dans le groupe constitué par les hydroxydes alcalins, l'hydroxyde d'ammonium, les hydroxydes alcalino-terreux, les hydroxydes de magnésium ou de calcium, par les ciments PORTLAND, les ciments alumineux, les aluminates alcalins, les aluminosilicates, seuls ou en combinaison.

Dans certains cas, il peut être souhaitable voire préférable, d'associer au moins deux agents régulateurs de recristallisation provenant de l'un et l'autre groupes précités dans le but de maîtriser mieux encore les dimensions des structures cristallines longilignes en cours de formation, et de jouer ainsi sur leur longueur et sur leur facteur de forme.

Dans d'autres cas, il peut être souhaitable dans le cadre de l'invention, d'introduire dans le milieu réactionnel le sulfate de calcium précité, sous la forme dihydratée finement broyé et/ou sélectionné et non éventé (ou non vieilli) ou encore sous la forme de structures cristallines longilignes obtenues selon l'invention, éventuellement broyées et/ou sélectionnées, comme amorce de germination, d'une manière simultanée ou indépendante des autres types d'agents régulateurs de recristallisation.

La nature de l'eau intervenant en tant que phase liquide dans la formation de la suspension aqueuse peut avoir une certaine importance quant à la maîtrise du procédé de préparation des structures cristallines longilignes. C'est pourquoi, il peut être souhaitable d'utiliser de l'eau distillée ou déminéralisée bien que toute eau disponible puisse être mise en oeuvre sans que des changements importants interviennent dans les réglages des autres paramètres du procédé.

5

Lors de la mise en oeuvre du procédé selon l'invention pour l'obtention des structures cristallines longilignes, une suspension aqueuse de sulfate de calcium semihydraté broyé et/ou sélectionné est en général préparée par dispersion d'une phase solide pulvérulente formée en tout ou partie par ledit sulfate de calcium, dans une phase liquide aqueuse portée à une température telle que la suspension de sulfate de calcium semihydraté ainsi formée soit à la température de transformation fixée à l'avance, et au plus égale à 60°C.

Toutefois, dans certains cas particuliers, il peut être intéressant de préparer ladite suspension aqueuse par dispersion dans la phase liquide de la phase solide pulvérulente portée à une température telle que la suspension de sulfate de calcium semihydraté broyé et/ou sélectionné ainsi formée soit à la température de transformation isothermique fixée à l'avance.

Au cours de sa formation, la suspension aqueuse de sulfate de calcium semihydraté broyé et/ou sélectionné est soumise à une agitation suffisante pour éviter la sédimentation dudit sulfate, favoriser sa dissolution et faciliter l'élaboration des structures cristallines longilignes selon l'invention.

La phase solide pulvérulente précédemment évoquée, quand elle est constituée en partie par le sulfate de calcium semihydraté broyé et/ou sélectionné à la dimension choisie, est formée du mélange physique dudit sulfate avec l'(es) agent(s) régulateur(s) de recristallisation.

La phase solide est alors introduite dans la phase liquide soumise à agitation pour y être dispersée et former une suspension aqueuse, ladite phase liquide se trouvant dans une enceinte appropriée munie des moyens d'agitation et de régulation nécessaires pour la porter à la température souhaitée et maintenir la suspension formée à ladite température tout au long de la réaction hydrothermique.

D'autres agents, aux fonctions diverses et connues de l'homme de l'art, peuvent également être introduits dans la suspension au moment le mieux choisi tels que par exemple des agents dispersants ayant la propriété d'éviter l'agglomération des structures cristallines longilignes en cours de formation et de favoriser leur développement régulier.

La composition de la suspension aqueuse ainsi formée exprimée en pour cent en poids de la masse totale, comporte :

a) de 0,85 à au plus 33,33 pour cent en poids, de préférence de 2,5 à 17 pour cent en poids, mais très préférentiellement de 4,0 à 11,0 pour cent en poids de sulfate de calcium semihydraté broyé et/ou sélectionné.

b) de 0,01 à 6,66 pour cent en poids, et de préférence de 0,02 à 2,5 pour cent en poids de l'agent régulateur de recristallisation.

c) de 0 à 3,33 pour cent en poids et préférentiellement de 0 à 0,85 pour cent en poids d'agents divers connus.

d) de 98,75 à au moins 66,66 pour cent en poids de la phase aqueuse.

Le rapport pondéral entre la phase liquide et la phase solide doit se situer de manière intéressante dans l'intervalle de 2 à 80, mais de préférence dans l'intervalle de 5 à 30, et très souhaitablement dans l'intervalle de 8 à 20.

L'(es) agent(s) régulateur(s) de recristallisation, comme cela a déjà été dit, est préférentiellement introduit dans la suspension sous la forme d'un mélange solide avec le sulfate de calcium semihydraté, la quantité dudit agent pouvant varier de 0,2 à 20 pour cent en poids dudit mélange solide.

Toutefois, dans certains cas, l'agent régulateur de recristallisation peut être utilisé sous une forme solubilisée en milieu aqueux quand le mécanisme d'action dudit agent nécessite son passage en solution.

De même, dans le cas où des agents aux fonctions diverses et connues, sont mis en oeuvre, ils peuvent être introduits dans le mélange solide précité ou dans la phase aqueuse selon une quantité qui peut atteindre au plus 10 pour cent en poids du mélange solide.

La suspension est généralement portée à une température de transformation isothermique qui ne peut dépasser 60°C et qui est choisie dans l'intervalle large de 5°C à 55°C et de préférence dans l'intervalle plus étroit de 10°C à 50°C.

Selon les caractéristiques dimensionnelles des structures cristallines longilignes souhaitées, la température de transformation isothermique est généralement choisie dans les basses valeurs de l'intervalle précité pour favoriser la formation de petites structures cristallines longilignes, tandis que cette température est généralement choisie dans les hautes valeurs dudit intervalle pour favoriser la formation de grandes structures cristallines longilignes, ladite température étant choisie entre ces extrêmes pour favoriser la formation de structures cristallines longilignes de longueurs intermédiaires.

La suspension de sulfate de calcium semihydraté broyé et/ou sélectionné et de l'agent régulateur de recristallisation ainsi formée, est maintenue sous agitation et à la température choisie, pendant le temps nécessaire à la formation et à la maturation hydroréactionnelles des structures cristallines longilignes selon

6

l'invention, ce temps n'excédant pas 60 minutes, étant généralement choisi inférieur à 45 minutes et préférentiellement fixé en marche industrielle entre 30 minutes et 3 minutes.

En pratique la température de traitement est choisie dans le domaine précité d'une manière telle que la transformation hydroréactionnelle du sulfate de calcium semihydraté broyé et/ou sélectionné en la structure cristalline longiligne de sulfate de calcium dihydraté, se fasse à une température minimum de formation et dans un temps souhaitablement le plus bref possible.

Dès lors et contrairement aux enseignements de l'art antérieur préconisant des milieux hydroréactionnels acides et/ou salins et des températures élevées (90 °C à 100 °C) pour disposer d'une cinétique rapide et d'un temps réactionnel raisonnable (au mieux entre 10 minutes et 30 minutes), s'est révélée de manière inattendue la possibilité de former des structures cristallines longilignes dotées d'une longueur et d'un facteur de forme maîtrisés, grâce à l'usage d'un milieu hydroréactionnel évoluant d'un pH neutre vers un pH alcalin, maintenu à une température constante et réputée basse, et ce avec un excellent rendement malgré un temps de réaction très court. Dès lors la formation desdites structures s'effectue par l'intermédiaire de la phase dissoute du sulfate de calcium semihydraté broyé et/ou sélectionné présent dans la suspension, ledit sulfate ne passant en solution qu'au fur et à mesure qu'apparaissent les structures cristallines longilignes selon l'invention.

Au terme de la transformation hydroréactionnelle, les structures cristallines longilignes de sulfate de calcium dihydraté sont obtenues avec un excellent rendement de transformation du sulfate de calcium semihydraté mis en oeuvre.

La phase solide cristallisée ainsi obtenue peut être maintenue en suspension aqueuse sans nul dommage pour les structures cristallines longilignes à longueur et à facteur de forme maîtrisés, ou bien être séparée de ladite suspension.

Quand la phase solide cristallisée ainsi obtenue n'est pas séparée de la phase aqueuse au terme de la transformation hydroréactionnelle, la suspension aqueuse desdites structures cristallines longilignes selon l'invention peut être mise industriellement en oeuvre telle qu'elle est ou faire l'objet, avant cette mise en oeuvre, d'une correction de sa teneur en matière sèche, par dilution ou par concentration. Dans ce dernier cas, l'augmentation de la teneur en matière sèche de ladite suspension peut se réaliser par tout moyen connu tel que évaporation, décantation, électro-concentration, ou autres.

Quand la phase solide cristallisée ainsi obtenue est séparée de la phase liquide, éventuellement chaude, cette séparation peut s'effectuer par tout moyen connu tel que décantation, filtration sous pression ou sous vide, hydrocyclonage, électrophorèse, centrifugation... ; puis elle est séchée selon l'un quelconque des procédés connus de l'homme de l'art.

La phase aqueuse obtenue lors de la séparation liquide-solide peut être recyclée à l'étape de la formation de la suspension aqueuse de sulfate de calcium semihydraté broyé et/ou sélectionné, en y ajoutant la quantité d'eau nécessaire pour combler les pertes lors de la séparation et en effectuant par ajouts les corrections de concentrations pour les divers agents intervenant ou non dans le procédé selon l'invention.

La phase solide recueillie après l'étape de séchage est formée des structures cristallines longilignes , bien individualisées et dotées d'une longueur et d'un facteur de forme maîtrisés. Ces structures cristallines longilignes ne nécessitent ni stabilisation thermique, ni revêtement comme le préconise l'art connu, et mises en présence d'eau saturée en sulfate de calcium elles conservent toutes leurs caractéristiques et en particulier leur longueur et leur facteur de forme.

Les structures cristallines longilignes produites conformément au procédé selon l'invention se composent de cristaux individualisés ou associés au plus trois à trois selon leur grand axe par recouvrement partiel. Lesdites structures disposent selon la demande, d'une longueur moyenne comprise entre 2 micromètres et 200 micromètres, d'une faible dispersion des longueurs et d'un facteur de forme maîtrisé (rapport de la longueur moyenne au plus grand diamètre apparent moyen), qui peut varier à la demande dans le domaine 5/1 à 50/1.

Les structures cristallines longilignes de sulfate de calcium dihydraté peuvent être transformées thermiquement si cela s'avère souhaitable pour certains emplois, en structures cristallines longilignes de sulfate de calcium semihydraté quand le traitement thermique est pratiqué à une température comprise entre 90 °C à 250 °C, ou encore d'anhydrites insolubles quand le traitement thermique dépasse la température de 250 °C (anhydrite II ou surcuit ou de 1 200 °C (anhydrite I), lesdites structures cristallines longilignes conservant au terme du traitement thermique toutes les caractéristiques dimensionnelles et en particulier leur longueur et leur facteur de forme, détenus par les structures dihydratées avant le traitement thermique.

Les structures cristallines longilignes selon l'invention, peuvent être utilisées dans de nombreux domaines industriels dès lors que leur longueur et leur facteur de forme maîtrisés les autorisent à jouer, par

7

exemple, un rôle de renfort dans certains matériaux ou un rôle de charge dans d'autres matériaux pour en améliorer les caractéristiques mécaniques, optiques, thermiques, d'aspect de surface ou autres.

Ainsi les structures cristallines longilignes selon l'invention, parce qu'elles disposent de qualités aussi diverses que légèreté, blancheur, opacité, brillant, facilité de dispersion, sont destinées plus spécialement à des domaines d'application aussi divers que ceux du papier, de la peinture et des matières plastiques. L'intérêt et la portée de l'invention seront mieux compris grâce aux exemples qui l'illustrent et qui la comparent à l'art connu.

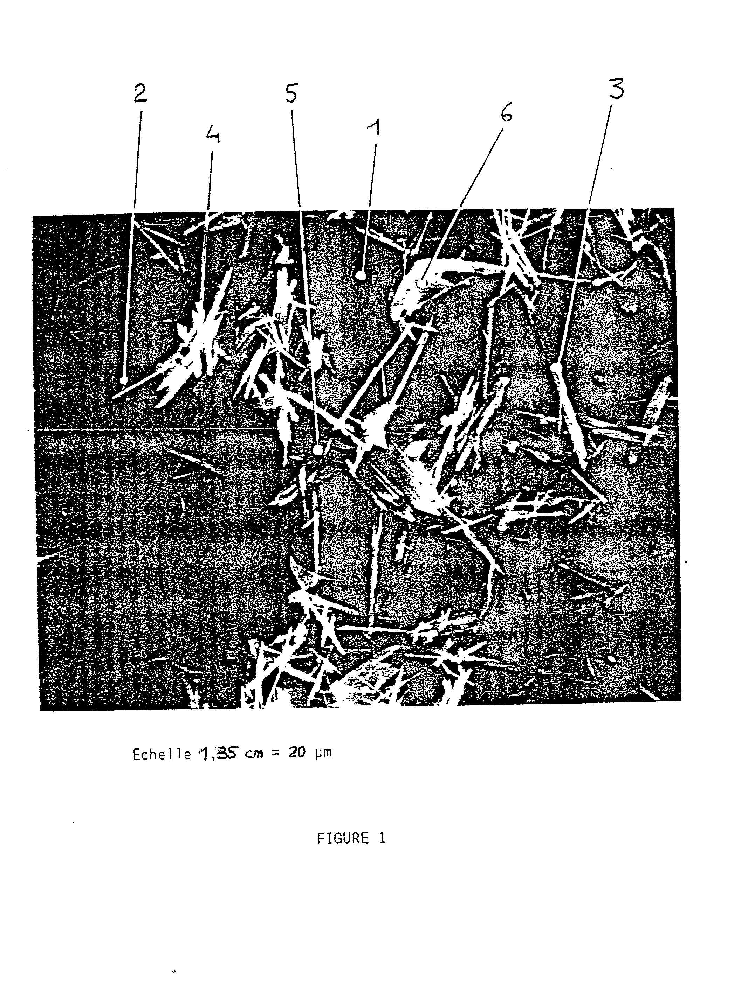

**EXEMPLE 1** (cas illustré par la Figure 1)

Afin de mettre en exergue les progrès techniques acquis par les structures cristallines selon l'invention et bien déceler l'activité créatrice attachée au procédé conduisant auxdites structures, cet exemple poursuit le but d'illustrer l'art antérieur par la préparation de structures cristallines ayant un facteur de forme anarchique quand l'une au moins des conditions selon l'invention n'est pas réalisée.

Dans cet esprit, plusieurs expérimentations (numéros 1.1 à 1.4) ont été conduites, utilisant comme source de matière première du sulfate de calcium semihydraté non adjuvanté (de marque "PRESTIA SELECTA", commercialisé par PLATRES LAFARGE) résultant du traitement thermique de gypse naturel.

Toutes les expérimentations concernent la formation de suspensions aqueuses (dans de l'eau distillée) dudit sulfate de calcium semihydraté, selon des concentrations variables, à des températures variables mais précises pour chacune d'entre elles, lesdites suspensions formées étant exemptes d'agent régulateur de recristallisation.

Toutes les expérimentations ont été réalisées selon les mêmes critères expérimentaux, en dehors de ceux précités, et dans le même appareillage afin que les résultats obtenus soient comparables.

Pour chaque expérimentation, la suspension aqueuse de sulfate de calcium semihydraté a été préparée par introduction de la phase solide dans la phase liquide chaude contenue dans une cuve de 1 300 litres munie d'un moyen d'agitation (ayant une vitesse circonférentielle variable de 10 à 20 mètres par seconde) et des moyens de chauffage appropriés permettant de maintenir d'abord la phase aqueuse seule puis la suspension formée, à la température choisie.

Le temps de recristallisation mesuré correspondait à la transformation quasi complète du sulfate de calcium semihydraté en sulfate de calcium dihydraté.

Les structures cristallines obtenues dans le cadre de chaque expérimentation, séparées de la phase aqueuse puis séchées, ont été soumises à une observation au microscope électronique à balayage (grossissement 500). Les caractéristiques et les résultats propres à chaque expérimentation ont été regroupés dans le Tableau A, tandis que les structures cristallines obtenues selon l'une des expérimentations appartenant à l'art antérieur (expérimentation 1.2) font l'objet de la Figure 1.

TABLEAU A

| Expérimentation N° | Broyage et/ou sélection préalables du Ca SO4, - H2O | Suspension de Ca SO4, - H2O | | | |
|---|---|---|---|---|---|
| | | Ca SO4, - H2O en % en poids | Agent régulateur de recristallisation en % en poids | Température de transformation isothermique en °C | Temps de cristallisation en mn |
| 1.1 | non | 16,67 | 0 | 45 | 60 |
| 1.2 | non | 9,09 | 0 | 45 | 60 |
| 1.3 | non | 6,25 | 0 | 45 | 60 |
| 1.4 | non | 4,76 | 0 | 45 | 60 |

Les structures cristallines obtenues dans le cadre de chaque expérimentation se révèlent être, à l'observation microscopique, un fouillis d'aiguilles de toutes longueurs et de tous diamètres, de mâcles et/ou d'agglomérats de multiples dimensions, donnant au facteur de forme un caractère anarchique (cristallisation désordonnée).

Selon la Figure 1 qui illustre l'art connu, et qui concerne l'observation photographique au microscope électronique à balayage des structures cristallines obtenues sous les conditions décrites pour l'expérimentation 1.2, le caractère anarchique desdites structures est patent dans la zone observée puisque par exemple sont visibles des aiguilles (1) de très petite longueur et de très faible diamètre, des aiguilles (2) de plus grande longueur mais de même diamètre que (1), des aiguilles (3) de longueur substantielle et de diamètre plus important, des agglomérats (4) d'aiguilles, des mâcles (5) ainsi que des "fers de lance" (6).

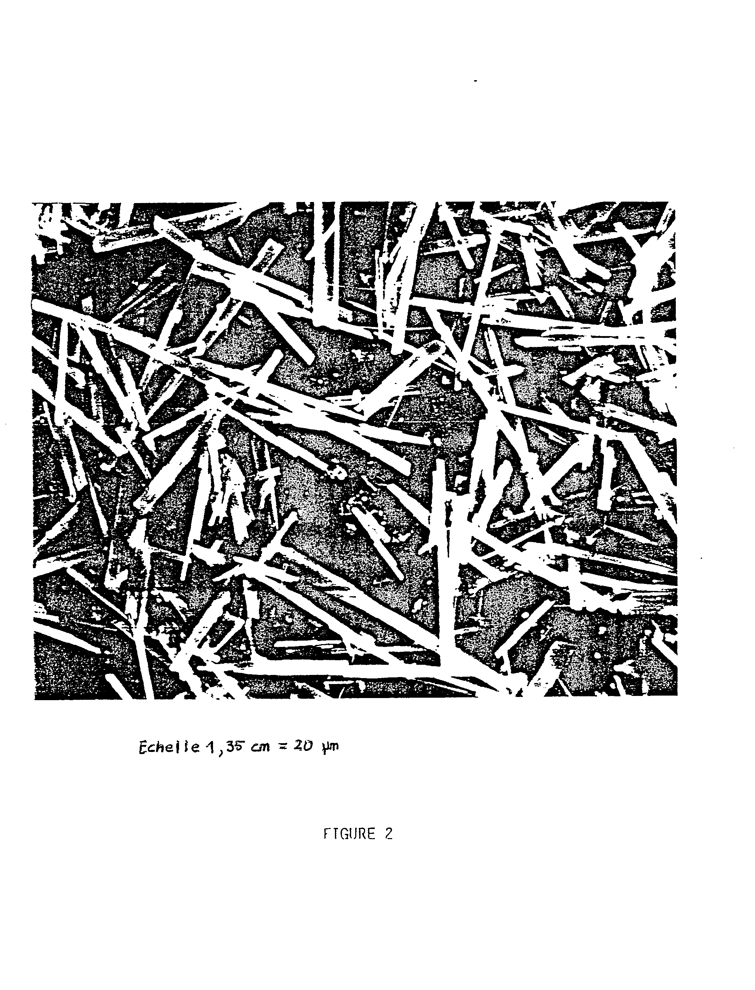

**EXEMPLE 2** (cas illustré par la Figure 2)

Cet exemple est une illustration de l'influence des caractéristiques dimensionnelles des particules de sulfate de calcium semihydraté non adjuvanté sur celles des structures cristallines longilignes formées selon le procédé de l'invention.

En pratique, du sulfate de calcium semihydraté résultant du traitement thermique du gypse (commercialisé sous le nom de marque "PRESTIA SELECTA" par PLATRES LAFARGE) est soumis à une opération de broyage et/sélection de telle manière que les particules disposent dans le cadre de trois expérimentations, de granulométries bien définies par les coupes :

2.1 coupe granulométrique à 16 micromètres

2.2 coupe granulométrique à 60 micromètres

2.3 coupe granulométrique à 120 micromètres

Les diverses opérations de broyage et de sélection ont été réalisées dans le même broyeur afin que les résultats soient comparables.

L'appareil utilisé était un broyeur à marteaux du type FORPLEX N° 2 (commercialisé par la société FORPLEX) muni d'un sélecteur dynamique SD1 à recirculation permettant la sélection des particules par leur dimension.

Le système broyeur-sélecteur était alimenté à raison de 200 à 300 kilogrammes à l'heure en sulfate de calcium semihydraté et permettait d'obtenir les coupes granulométriques souhaitées en fonction des réglages indiqués ci-après.

| Coupe Granulométrique (μm) | 16 | 60 | 120 |
|---|---|---|---|
| Vitesse de rotation du broyeur (tr/mn) | 6000 | 5400 | 2400 |
| Vitesse de rotation du sélecteur (tr/mn) | 3000 | 1350 | 640 |

A l'issue du broyage, le sulfate de calcium semihydraté broyé et sélectionné a été adjuvanté par un agent régulateur de recristallisation (ciment PORTLAND CPA 45 commercialisé par CIMENTS LAFARGE) à raison de 5,26 pour cent en poids par rapport au sulfate de calcium semihydraté, le mélange constituant la phase solide pulvérulente destinée à être introduite dans la phase liquide préalablement chauffée.

La phase solide a, dès lors, été introduite dans une cuve de cristallisation munie de moyens d'agitation et de réglage de la température de la phase liquide qu'elle contenait préalablement. La phase liquide constituée par de l'eau distillée était maintenue à la température de transformation isothermique fixée à 45°C. Au cours de sa formation, la suspension aqueuse chaude de sulfate de calcium semihydraté broyé et sélectionné était maintenue sous une agitation suffisante pour éviter la sédimentation dudit sulfate, favoriser sa dissolution et faciliter l'élaboration des structures cristallines longilignes.

La composition de la suspension aqueuse pour chaque expérimentation était la suivante exprimée en pour cent en poids :

| . Sulfate de calcium semihydraté broyé et sélectionné : | 8,64 |
|---|---|
| . Agent régulateur de recristallisation : | 0,45 |
| . Eau distillée : | 90,91 |

La suspension ainsi formée a été maintenue sous agitation et à la température de 45°C pendant le temps de recristallisation du sulfate de calcium dihydraté, qui s'est élevé à 30 minutes.

10

Deux minutes après l'introduction de la phase solide et tout au long de la transformation isothermique dudit semihydrate, le pH de la suspension a évolué dans l'intervalle 11,5 à 12,5.

A l'issue de la transformation isothermique, les structures cristallines longilignes ont été recueillies par filtration de la phase aqueuse puis elles ont été séchées à une température d'environ 45° C et soumises à une observation microscopique au moyen d'un microscope électronique à balayage (grossissement 500) en vue de déterminer leurs longueur, diamètre et facteur de forme.

Les résultats propres à chaque expérimentation et les caractéristiques des structures cristallines longilignes obtenues ont été regroupés dans le Tableau B ci-après.

Les structures cristallines longilignes obtenues dans le cadre de chaque expérimentation révèlent, à l'observation microscopique, l'existence d'aiguilles régulières en longueur et diamètre, bien individualisées et dotées d'un facteur de forme maîtrisé.

La Figure 2, qui illustre l'invention, est l'observation photographique au microscope électronique, à balayage, grossissement 500, des structures cristallines obtenues dans les conditions de l'expérimentation 2.3. La comparaison des Figures 2 et 1 révèle le caractère maîtrisé du procédé selon l'invention à côté de l'anarchie provoquée par un procédé de l'art antérieur.

TABLEAU B

| Expérimentation N° | Broyage et sélection préalables du Ca SO4, - H2O Coupe en micromètres | Suspension aqueuse de Ca SO4, - H2O | | | Temps de recristallisation en minutes | Structures cristallines longilignes | | |
|---|---|---|---|---|---|---|---|---|
| | | Concentration en % en poids | Agent régulateur de recristallisation en % en poids | Température de transformation isothermique en °C | | Longueur en micromètres | Diamètre en micromètres | Facteur de forme |
| 2.1 | 16 | 8,64 | 0,45 | 45 | 30 | 25 - 35 | 1,0 - 1,5 | 25 - 20 |
| 2.2 | 60 | 8,64 | 0,45 | 45 | 30 | 35 - 45 | 1,8 - 2,2 | 19,5 - 20,5 |
| 2.3 | 120 | 8,64 | 0,45 | 45 | 30 | 60 - 80 | 3,0 - 4,0 | 20 |

EP 0 334 292 A1

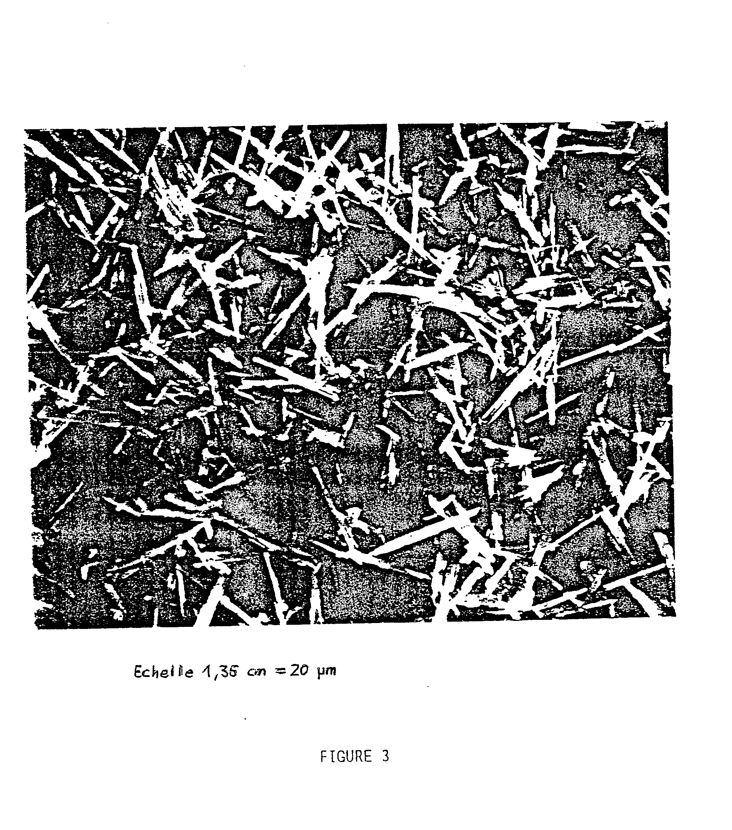

**EXEMPLE 3** (cas illustré par la Figure 3)

Cet exemple est une illustration de l'influence du temps de stockage du sulfate de calcium semihydraté avant et/ou après son broyage et sa sélection sur les caractéristiques dimensionnelles des structures cristallines longilignes formées selon le procédé de l'invention.

En pratique, du sulfate de calcium semihydraté non adjuvanté provenant du traitement thermique du gypse (commercialisé sous le nom de marque "PRESTIA SELECTA" par PLATRES LAFARGE) a été soumis à une opération de broyage-sélection, précédée ou suivie d'un temps de stockage plus ou moins prolongé avant de lui faire subir les autres étapes du procédé de l'invention.

Les diverses expérimentations ont été les suivantes :

**3.1** : du sulfate de calcium semihydraté "SELECTA" provenant du traitement thermique du gypse a été soumis sans stockage préalable à un broyage-sélection donnant une coupe granulométrique à 16 micromètres, puis immédiatement après, a subi les autres étapes du procédé.

**3.2** : du sulfate de calcium semihydraté "SELECTA" provenant du traitement thermique du gypse a été soumis après un stockage de trois mois à un broyage-sélection donnant une coupe granulométrique à 16 micromètres, puis immédiatement après, a subi les autres étapes du procédé.

**3.3** : du sulfate de calcium semihydraté "SELECTA" provenant du traitement thermique du gypse a été soumis sans stockage préalable à un broyage-sélection donnant une coupe granulométrique à 16 micromètres, puis après un stockage postbroyage de trois mois, a subi les autres étapes du procédé.

**3.4** : du sulfate de calcium semihydraté "SELECTA" provenant du traitement thermique du gypse a été soumis après un stockage de trois mois à un broyage-sélection donnant une coupe granulométrique à 16 micromètres, puis immédiatement après a subi les autres étapes du procédé.

Les diverses opérations de broyage-sélection ont été réalisées dans le broyeur FORPLEX déjà mis en oeuvre dans l'exemple 2 selon le même mode opératoire.

A l'issue du broyage-sélection suivi ou non de la période de stockage, le sulfate de calcium semihydraté a été adjuvanté par deux agents régulateurs de recristallisation : chaux et mélange de gypse et d'amidon (B.M.A. décrit dans le brevet français FR 2, 228, 735). Le taux d'agent de recristallisation est compris entre 0,8 et 1,5 pour cent en poids par rapport au sulfate de calcium semihydraté mis en oeuvre, ce mélange constituant la phase solide pulvérulente destinée à être introduite dans la phase liquide préalablement chauffée.

La phase solide ainsi formée a été introduite dans la cuve de cristallisation munie des moyens d'agitation et de réglage de la température de la phase liquide qu'elle contenait préalablement.

La phase liquide était constituée d'eau distillée maintenue à la température de transformation isothermique fixée à 50° C.

Au cours de sa formation, la suspension aqueuse chaude de la phase solide précitée était maintenue sous agitation suffisante pour les mêmes motifs que ceux évoqués dans l'exemple 2.

La composition de la suspension aqueuse pour chaque expérimentation était la suivante, exprimée en pour cent en poids :

. Sulfate de calcium semihydraté broyé et sélectionné : de 9,02 à 8,95
. Agent régulateur de recristallisation : de 0,07 à 0,14
. Eau distillée : 90,91

La suspension ainsi formée a été maintenue sous agitation et à la température de 50° C pendant le temps de recristallisation du sulfate de calcium dihydraté, qui s'est élevé à 15 minutes. Après avoir été recueillies par filtration, les structures cristallines longilignes ont été séchées à une température d'environ 50° C et soumises à une observation microscopique au moyen d'un microscope électronique à balayage (grossissement 500) en vue de déterminer leurs longueur, diamètre et facteur de forme.

Les résultats attachés à chaque expérimentation et les caractéristiques des structures cristallines longilignes obtenues ont été regroupés dans le Tableau C qui montre que le stockage après broyage est le seul à avoir une influence.

TABLEAU C

| Expérimentation N° | Broyage et sélection du Ca SO4, - H2O | | | Suspension aqueuse de Ca SO4, - H2O | | | Temps de recristallisation en mn | Structures cristallines longilignes | | |
|---|---|---|---|---|---|---|---|---|---|---|
| | Stockage avant | Broyage et Sélection Coupe en micromètres | Stockage après | Concentration en % en poids | Agent régulateur de recristallisation en % en poids par rapport au sulfate | Température de transformation Isothermique en °C | | Longueur en micromètres | Diamètre en micromètres | Facteur de Forme |
| 3.1 | non | 16 | non | 8,95 | CaO = 0,5 BMA = 1 | 50 | 15 | 20 - 40 | 2 - 5 | 10 - 8 |
| 3.2 | 3 mois | 16 | non | 8,95 | CaO = 0,5 BMA = 1 | 50 | 15 | 20 - 40 | 2 - 5 | 10 - 8 |
| 3.3 | non | 16 | 3 mois | 9,02 | CaO = 0,5 BMA = 0,3 | 50 | 15 | 55 - 65 | 4 - 6 | 13,75 - 10,8 |
| 3.4 | 3 mois | 16 | non | 9,02 | CaO = 0,5 BMA = 0,3 | 50 | 15 | 30 - 50 | 2 - 4 | 15 - 12,5 |

EP 0 334 292 A1

Les structures cristallines longilignes obtenues dans le cadre de chaque expérimentation révèlent, à l'observation microscopique, l'existence d'aiguilles régulières en longueur et diamètre, bien individualisées et dotées d'une longueur et d'un facteur de forme maîtrisés.

La Figure 3, qui illustre l'invention, est l'observation photographique au microscope électronique à balayage (grossissement 500) des structures cristallines obtenues sous les conditions de l'expérimentation 3.2.

La comparaison des Figures 1 à 3 révèle le caractère maîtrisé du procédé qui autorise la production de structures cristallines longilignes de longueur et de facteur de forme souhaités (Figures 2 et 3), alors que l'art antérieur (Figure 1) conduit à la production de structures cristallines anarchiques.

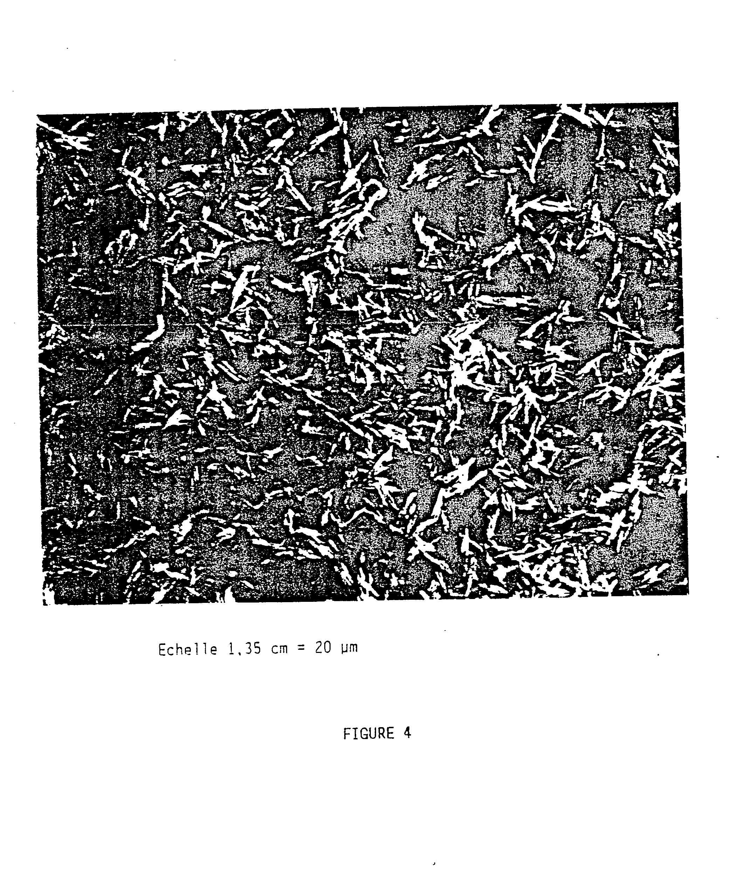

**EXEMPLE 4** (cas illustré par la figure 4)

Cet exemple illustre l'influence du type et/ou de la concentration de l'agent régulateur de recristallisation mis en oeuvre. Dans ce but, du sulfate de calcium semihydraté non adjuvanté, de même origine que dans l'exemple 3, a été soumis à une opération de broyage et de sélection selon une coupe granulométrique spécifique au maximum égale à 120 micromètres, dans le broyeur FORPLEX précité.

A l'issue du broyage et de la sélection, le sulfate de calcium semihydraté a été adjuvanté par un agent régulateur de recristallisation propre à chacune des expérimentations 4.2 à 4.10 et selon des concentrations données exprimées en pour cent en poids par rapport à la masse totale.

Dans le cas de l'expérimentation 4.1, l'agent régulateur de recristallisation (ammoniaque) a été introduit directement dans la phase liquide préalablement à la dispersion du sulfate de calcium semihydraté, broyé et sélectionné.

Les expérimentations 4.1 à 4.3 concernent l'usage de divers agents régulateurs de recristallisation (ammoniaque, ciment PORTLAND CPA 45, mélange de chaux et de B.M.A., ce dernier étant décrit dans le brevet français FR 2,228, 735).

Les expérimentations 4.4. à 4.6 concernent l'usage à diverses concentrations comme agent régulateur de recristallisation de gypse broyé et sélectionné, selon une granulométrie ayant une coupe à 16 micromètres.

Les expérimentations 4.7 à 4.10 concernent l'usage à diverses concentrations, comme agent régulateur de recristallisation, de ciment PORTLAND CPA 45.

Toutes les expérimentations ont été réalisées dans le même appareillage que précédemment afin que les résultats obtenus soient comparables, et selon les critères expérimentaux exposés dans le Tableau D ci-après ainsi que les résultats propres à chaque expérimentation.

EP 0 334 292 A1

TABLEAU D

| Expéri- mentation N° | Broyage et Sélection préalables du Ca SO4, ½ H2O --------- Coupe en micromètres | Agent régulateur de recristallisation Type | Concen- tration en % en poids de la suspension | Suspension aqueuse de CuSO4, ½ H2O Concen- tration en % en poids | Température de trans- formation isother- mique en °C | Temps de recristal- lisation en mn | pH à 2 mn après la formation de la suspension | Structures cristallines longilignes Longueur en micromètres | Diamètre en micromètres | Facteur de Forme |
|---|---|---|---|---|---|---|---|---|---|---|
| 4.1 | 120 | ammoniaque pure | 0,32 | 8,77 | 45 | 15 | 11,6 | 15 – 30 | 1 – 2 | 15 |
| 4.2 | 120 | Ciment Portland CPA 45 | 0,45 | 8,64 | 45 | 30 | 11,5 | 60 – 80 | 3 – 4 | 20 |
| 4.3 | 16 | ) Ca O + ) BMA | 0,045 + 0,091 | 8,95 | 45 | 15 | 11,7 | 20 – 40 | 2 – 5 | 10 – 8 |
| 4.4 | 16 | Gypse broyé et sélectionné inférieur à | 0,27 | 8,82 | 25 | 15 | 8 | 5 – 10 | 1 (mâcles) | 5 – 10 |
| 4.5 | 16 | | 0,45 | 8,64 | 25 | 15 | 8 | 7 – 10 | 1 | 7 – 10 |
| 4.6 | 16 | 16 μm | 0,91 | 8,18 | 25 | 15 | 8 | 5 – 7 | 0,5 | 10 – 14 |
| 4.7 | 16 | ) Ciment ) | 0,27 | 8,82 | 45 | 30 | 11,5 | 30 – 50 | 1,5 – 3,5 | 20 – 14 |
| 4.8 | 16 | ) | 0,45 | 8,64 | 45 | 30 | 11,5 | 40 – 60 | 1 – 1,5 | 40 |
| 4.9 | 16 | ) Portland ) | 0,91 | 8,18 | 45 | 30 | 11,5 | 40 – 50 | 2 – 3 | 20 – 16 |
| 4.10 | 16 | ) ) CPA 45 | 1,36 | 7,73 | 45 | 30 | 11,5 | 40 – 60 | 2 – 3 | 20 |

Les structures cristallines obtenues dans le cadre de chaque expérimentation révèlent, à l'observation microscopique, l'existence d'aiguilles régulières en longueur et diamètre, bien individualisées et dotées de longueur et facteur de forme maîtrisés. En particulier, le fait de changer le type d'agent régulateur de recristallisation, ou encore de faire évoluer la concentration d'un agent particulier, permet d'obtenir des structures cristallines longilignes dont la longueur évolue dans l'intervalle 5 micromètres à 80 micromètres selon la longueur et le facteur de forme recherchés.

La Figure 4 qui illustre l'invention est l'observation photographique au microscope électronique à balayage (grossissement 500) des structures cristallines obtenues sous les conditions de l'expérimentation 4.6.

La comparaison des Figures 2, 3 et 4 montre le caractère tout à fait maîtrisé du procédé selon l'invention qui permet la production de structures cristallines longilignes de longueur et de facteur de forme souhaités et maîtrisés.

## EXEMPLE 5

Cet exemple illustre l'influence de la température de transformation isothermique. Dans ce but, du sulfate de calcium semihydraté non adjuvanté, de même origine que dans les exemples précédents, a été soumis à une opération de sélection selon une coupe granulométrique spécifique à 120 micromètres, dans le sélecteur FORPLEX précité.

A l'issue de la sélection, le sulfate de calcium semihydraté a été adjuvanté par un agent régulateur de recristallisation. Toutes les expérimentations ont été réalisées dans le même appareillage que précédemment afin que les résultats obtenus soient comparables. Les critères expérimentaux sont indiqués dans le Tableau E ci-après ainsi que les résultats propres à chaque expérimentation.

Les expérimentations 5.1 à 5.3 concernent l'influence de la température de transformation isothermique sur les dimensions des structures cristallines longilignes, les autres caractéristiques du procédé étant maintenues identiques d'une expérimentation à l'autre.

L'expérimentation 5.4 concerne l'influence de la température de transformation isothermique choisie particulièrement basse, appliquée à du sulfate de calcium semihydraté broyé et sélectionné selon une coupe granulométrique spécifique de 16 micromètres.

Les structures cristallines obtenues dans le cadre de chaque expérimentation révèlent, à l'observation au microscope électronique à balayage, (grossissement 500) l'existence d'aiguilles régulières en longueur et en diamètre, bien individualisées et dotées de longueur et de facteur de forme choisis à l'avance et maîtrisés, aucune autre structure cristalline n'étant observée, telle que mâcle ou fer de lance, sauf dans le cas de l'expérimentation 5.3 où la température pratiquée était en dehors des limites de l'invention.

17

TABLEAU E

| Expéri- mentation N° | Sélection préalable du Ca SO4, ½ H2O Coupe en micromètres | Agent régulateur de recristallisation Type | Concentration en % en poids par rapport à la suspension | Suspension aqueuse de Ca SO4, ½ H2O Concentration en % en poids | Température de transformation isothermique en °C | Temps de recristallisation en mn | pH à 2 mn après la formation de la suspension | Structures cristallines longilignes Longueur en micromètres | Diamètre en micromètres | Facteur de Forme |
|---|---|---|---|---|---|---|---|---|---|---|
| 5.1 | 120 | ) Ciment | 0,45 | 8,64 | 45 | 30 | 11,5 | 60 – 80 | 3 – 4 | 20 |
| 5.2 | 120 | ) Portland | 0,45 | 8,64 | 60 | 30 | 11,5 | 80 – 150 | 8 – 10 | 10 – 15 |
| 5.3 | 120 | ) CPA 45 | 0,45 | 8,64 | 80 | 30 | 11,5 | bâtonnets plaques | – | mauvais |
| 5.4 | 16 (Broyage et Sélection) | Gypse Broyé et sélectionné | 0,91 | 8,18 | 10 | 5 | 8 | 2 – 3 | 0,4 -0,5 | 5 – 6 |

EP 0 334 292 A1

## EXEMPLE 6

Cet exemple illustre l'influence de la nature de l'eau intervenant en tant que phase liquide dans la formation de la suspension aqueuse.

En pratique, du sulfate de calcium semihydraté, non adjuvanté, produit par l'usine Plâtres Lafarge d'Ottmarsheim (France) à partir de désulfogypse, a été soumis à une opération de broyage et sélection permettant d'obtenir une coupe granulométrique spécifique à 16 micromètres, dans le broyeur FORPLEX précité.

A l'issue du broyage et de la sélection, le sulfate de calcium semihydraté à été adjuvanté par les mêmes agents régulateurs de recristallisation (CaO + BMA) selon des concentrations identiques exprimées en pour cent en poids par rapport à la masse totale de la suspension.

Ce mélange constituait la phase solide pulvérulente destinée à être dispersée dans la phase liquide préalablement chauffée.

Cette phase solide a alors été introduite dans la phase liquide contenue dans la cuve de cristallisation, munie de moyens d'agitation et de réglage de la température de transformation isothermique, fixée à 25° C.

Deux expérimentations (6.1 et 6.2) ont été successivement réalisées.

L'expérimentation 6.1 concernait l'usage comme phase liquide d'une eau potable dont l'analyse a conduit à un titre hydrotimétrique (TH) de 36,8 et à un titre alcalimétrique complet (TAC) de 32,6 mesurés selon les normes NF T 90 003 et T 90 036.

L'expérimentation 6.2 concerne l'usage comme phase liquide d'une eau distillée.

La composition de la suspension aqueuse pour chaque expérimentation était la suivante, exprimée en pour cent en poids :

| | |
|---|---|
| Sulfate de calcium semihydraté broyé et sélectionné | 9,020 |
| Agents régulateurs de recristallisation CaO + BMA | 0,072 |
| Eau | 90,908 |

Chaque suspension ainsi formée a été maintenue sous agitation et à la température de transformation isothermique (25° C) pendant le temps de recristallisation du sulfate de calcium dihydraté qui s'est élevé à vingt minutes. Après avoir été recueillies et séchées, les structures cristallines longilignes ont été soumises à une observation visuelle au microscope électronique à balayage selon un grossissement 500, afin de déterminer leur longueur, diamètre et facteur de forme.

Les résultats attachés à chaque expérimentation et les caractéristiques des structures cristallines longilignes obtenues ont été regroupés dans le tableau F.

L'observation des résultats révèle l'existence d'aiguilles régulières en longueur et diamètre, bien individualisées, dont les différences ne sont pas très significatives quand une eau calcaire est substituée à de l'eau distillée.

19

TABLEAU F

| Expéri-mentation N° | Broyage et Sélection du Ca SO4, ½ H2O ---- Coupe en micromètres | Agent régulateur de recristallisation | | Suspension aqueuse de Ca SO4, ½ H2O | | | pH à 2 mn après la formation de la suspension | Structures cristallines longilignes | | |
|---|---|---|---|---|---|---|---|---|---|---|
| | | Type | Concen-tration en % en poids par rapport à la solution | Concen-tration en % en poids | Température de trans-formation isother-mique en °C | Temps de recristal-lisation en mn | | Longueur en micromètres | Diamètre en micromètres | Facteur de Forme |
| 6.1 | 16 | CaO + BMA | 0.045 0.027 | 9.02 | 25 | 20 | 11.7 | 18 – 20 | 1,5 | 12- 13 |
| 6.2 | 16 | CaO + BMA | 0.045 0.027 | 9.02 | 25 | 20 | 11.7 | 15 – 17 | 1,3 | 11,5 – 13 |

EP 0 334 292 A1

## EXEMPLE 7

Cet exemple est une illustration de l'influence de la concentration du sulfate de calcium semihydraté broyé dans la suspension aqueuse. Dans ce but du sulfate de calcium semihydraté non adjuvanté a été soumis à une opération de broyage, de telle manière que 96 % des particules soient inférieures à 120 micromètres, dans le broyeur FORPLEX précité.

A l'issue du broyage, le sulfate de calcium semihydraté a été adjuvanté par un agent régulateur de recristallisation (gypse broyé et sélectionné selon une coupe spécifique à 16 micromètres).

Toutes les opérations de recristallisation ont été réalisées dans le même appareillage que précédemment afin que les résultats obtenus soient comparables. Les critères expérimentaux pratiqués ont été indiqués dans le tableau G ci-après ainsi que les résultats propres à chaque expérimentation.

Les expérimentations 7.1 à 7.4 concernent l'influence de la concentration en sulfate de calcium semihydraté broyé, les autres caractéristiques étant maintenues constantes. Le temps de recristallisation n'a pu être maintenu fixe d'une expérimentation à l'autre en raison de l'évolution de la concentration en sulfate de calcium semihydraté dans la suspension de départ.

Les structures cristallines obtenues dans le cadre de chaque expérimentation révèlent, à l'observation au microscope électronique à balayage (grossissement 500) l'existence d'aiguilles régulières, bien individualisées et dont les longueurs, diamètres et facteurs de forme sont précisés dans le tableau G. Dans la gamme des concentrations testées en semihydrate, il se révèle que la longueur des aiguilles varie peu. Toutefois il apparait que plus la concentration de la suspension est faible, plus la dispersion de la taille desdites aiguilles est importante.

**TABLEAU G**

| Expéri- mentation N° | Broyage préalable du Ca SO4, ½ H2O -------- 96 % des particules < micromètres | Agent régulateur de recristallisation | | Suspension aqueuse de Ca SO4, ½ H2O | | | pH à 2 mn après la formation de la suspension | Structures cristallines longilignes | | |
|---|---|---|---|---|---|---|---|---|---|---|
| | | Type | Concen- tration en % en poids par rapport à la suspension | Concen- tration en % en poids | Température de trans- formation isother- mique en °C | Temps de recristal- lisation en mn | | Longueur en micromètres | Diamètre en micromètres | Facteur de Forme |
| 7.1 | 120 | ) ) Gypse ) ) broyé ) ) ) et ) ) sélec- ) tionné ) ) à ) ) 16 µm | 1,67 | 31,67 | 45 | 5 | 8 | 5 – 8 | 1 – 1,5 | 5 – 5,3 |
| 7.2 | 120 | | 0,45 | 8,64 | 45 | 10 | 8 | 5 – 10 | 0,5 – 1,5 | 10 – 6,6 |
| 7.3 | 120 | | 0,16 | 3,06 | 45 | 20 | 8 | 5 – 15 | 0,5 – 1,5 | 10 |
| 7.4 | 120 | | 0,07 | 1,34 | 45 | 30 | 8 | 5 – 15 | 0,5 – 2 | 10 – 7,5 |

## Revendications

1) Procédé de préparation de sulfate de calcium dihydraté ayant l'aspect de structures cristallines longilignes à partir de sulfate de calcium semihydraté, de variété "β" et/ou "α", caractérisé en ce que, dans le but de les doter d'une longueur et d'un facteur de forme maitrisés, il comprend :

a) Le broyage et/ou la sélection dudit sulfate de calcium semihydraté selon une granulométrie choisie telle que la coupe granulométrique spécifique pour l'obtention des structures cristallines longilignes de longueur et de facteur de forme préalablement fixés, appartienne au domaine délimité par les bornes 5 micromètres et 200 micromètres,

b) la présence d'au moins un agent régulateur de recristallisation, à raison de 0,01 à 6,66 pour cent en poids, par rapport à la masse totale de la suspension à former dans l'étape c,

c) la formation par dispersion à partir des matériaux des étapes a et b d'une suspension aqueuse à une température de transformation isothermique fixée au plus égale à 60°C, ayant une teneur en matière sèche d'au plus 33,33 pour cent en poids par rapport à la masse totale de la suspension,

d) le maintien de la température à la valeur fixée pendant un temps d'au plus 60 minutes et,

e) éventuellement la séparation des structures cristallines longilignes à longueur et à facteur de forme maîtrisés.

2) Procédé de préparation selon la revendication 1, caractérisé en ce que le broyage et/ou la sélection du sulfate de calcium semihydraté selon une granulométrie choisie est tel que la coupe granulométrique spécifique pour l'obtention des structures cristallines longilignes de longueur et de facteur de forme préalablement fixés, appartienne préférentiellement au domaine délimité par les bornes 5 micromètres et 150 micromètres.

3) Procédé de préparation selon l'une des revendications 1 ou 2, caractérisé en ce que le broyage et/ou la sélection du sulfate de calcium semihydraté s'effectue préférentiellement par l'usage de broyeurs à marteaux, à boulets ou à doigts, en atmosphère sèche ou contrôlée, et/ou de sélecteurs statiques ou dynamiques.

4) Procédé de préparation selon l'une quelconque des revendications 1 à 3, caractérisé en ce que le sulfate de calcium semihydraté broyé et/ou sélectionné est mis en oeuvre immédiatement après le broyage et/ou la sélection.

5) Procédé de préparation selon l'une quelconque des revendications 1 à 3, caractérisé en ce que le sulfate de calcium semihydraté broyé et/ou sélectionné est mis en oeuvre après vieillissement contrôlé des particules broyées et/ou sélectionnées.

6) Procédé de préparation selon l'une quelconque des revendications 1 à 5, caractérisé en ce que l'agent régulateur de recristallisation est de caractère chimiquement neutre et est préférentiellement choisi dans le groupe constitué par les halogénures, les sulfates, les nitrates, les silicates, les halogénosilicates de lithium, de sodium, de potassium, d'ammonium, de calcium, de magnésium, d'aluminium, pris seuls ou en combinaison.

7) Procédé de préparation selon l'une quelconque des revendications 1 à 5, caractérisé en ce que l'agent régulateur de recristallisation est de caractère chimiquement alcalin et est préférentiellement choisi dans le groupe constitué par les hydroxydes alcalins, l'hydroxyde d'ammonium, les hydroxydes alcalino-terreux, l'hydroxyde de magnésium, l'hydroxyde de calcium, par les ciments PORTLAND, par les ciments alumineux, par les aluminates alcalins et les aluminosilicates, seuls ou en combinaison.

8) Procédé de préparation selon l'une quelconque des revendications 1 à 7, caractérisé en ce que l'agent régulateur de recristallisation est constitué de la combinaison d'au moins deux agents régulateurs de cristallisation provenant des groupes à caractère neutre et à caractère alcalin.

9) Procédé de préparation selon l'une quelconque des revendications 1 à 8, caractérisé en ce que l'agent régulateur de recristallisation est introduit dans la suspension sous forme d'un mélange solide avec le sulfate de calcium semihydraté broyé et/ou sélectionné

10) Procédé de préparation selon l'une quelconque des revendications 1 à 8, caractérisé en ce que l'agent régulateur de recristallisation est utilisé sous une forme solubilisée en milieu aqueux.

11) Procédé de préparation selon l'une quelconque des revendications 1 à 10, caractérisé en ce que la suspension aqueuse de sulfate de calcium semihydraté broyé et/ou sélectionné est formée préférentiellement à partir d'eau distillée ou déminéralisée.

23

12) Procédé de préparation selon l'une quelconque des revendications 1 à 11, caractérisé en ce que la suspension aqueuse de sulfate de calcium semihydraté broyé et/ou sélectionné est préparée par dispersion de la phase solide dans la phase liquide aqueuse portée à la température de transformation isothermique fixée au plus égale à 60° C.

13) Procédé de préparation selon l'une quelconque des revendications 1 à 8, caractérisé en ce qu'une amorce de germination est introduite dans le milieu réactionnel, ladite amorce étant formée de sulfate de calcium dihydraté éventuellement broyé et/ou sélectionné.

14) Procédé de préparation selon l'une quelconque des revendications 1 à 13, caractérisé en ce que la formation par dispersion de la suspension aqueuse met en oeuvre par rapport à la masse totale :

a) de 0,85 à au plus 33,33 pour cent en poids, de préférence de 2,5 à 17,0 pour cent en poids, et très préférentiellement de 4,0 à 11,0 pour cent en poids de sulfate de calcium semihydraté broyé et/ou sélectionné,

b) de 0,01 à 6,66 pour cent en poids, et de préférence de 0,02 à 2.5 pour cent en poids de l'agent régulateur de recristallisation,

c) de 0 à 3,33 pour cent en poids et préférentiellement de 0 à 0,85 pour cent en poids d'agents divers connus,

d) de 98,75 à au moins 66 66 pour cent en poids de la phase aqueuse.

15) Procédé de préparation selon l'une quelconque des revendications 1 à 14, caractérisé en ce que la température de transformation isothermique est généralement choisie dans l'intervalle large de 5° C à 55° C et de préférence dans l'intervalle plus étroit de 10° C à 50° C.

16) Procédé de préparation selon l'une quelconque des revendications 1 à 15, caractérisé en ce que la suspension de sulfate de calcium semihydraté broyé et/ou sélectionné est maintenue sous agitation et à la température de transformation isothermique pendant un temps généralement inférieur à 45 minutes et préférentiellement compris entre 30 et 3 minutes.

17) Procédé de préparation selon l'une quelconque des revendications 1 à 16, caractérisé en ce que les structures cristallines longilignes provenant de l'étape de séparation e) sont soumises à un traitement thermique.

18) Structures cristallines longilignes de sulfate de calcium dihydraté selon la revendication 17, caractérisées en ce que le traitement thermique est un séchage.

19) Structures cristallines longilignes de sulfate de calcium semihydraté selon la revendication 17, caractérisées en ce que le traitement thermique est pratiqué à une température comprise entre 90° C et 250° C.

20) Structures cristallines longilignes de sulfate de calcium anhydre selon la revendication 17, caractérisées en ce que le traitement thermique est pratiqué à une température d'au moins 250° C pour l'obtention d'anhydrite II, et d'au moins 1 200° C pour l'obtention d'anhydrite 1.

21) Structures cristallines longilignes selon l'une quelconque des revendications 1 à 20, caractérisées en ce qu'elles disposent à la demande d'une longueur moyenne comprise entre 2 micromètres et 200 micromètres et d'un facteur de forme compris dans l'intervalle 5/1 à 50/1.

22) Applications des structures cristallines longilignes obtenues selon l'une quelconque des revendications 1 à 21, sous la forme solide ou sous la forme d'une dispersion dans une phase liquide, aux domaines du papier, de la peinture et des matières plastiques.

Echelle 1,35 cm = 20 μm

FIGURE 1

Echelle 1,35 cm = 20 µm

FIGURE 2

Echelle 1,35 cm = 20 µm

FIGURE 3

Echelle 1,35 cm = 20 µm

FIGURE 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 3, no. 118 (C-60), 4 octobre 1979, page 97 C 60; & JP-A-54 99 099 (KURARAY K.K.) 04-08-1979 * Résumé * --- | 1,14-16 | C 01 F 11/46<br>D 21 H 5/18<br>C 09 C 1/02<br>C 04 B 14/38 |
| A | EP-A-0 056 200 (GALCERIN-VILLA) * Revendications; page 3, lignes 6-23; exemple 1 * --- | 1,22 | |
| A | US-A-4 286 995 (SMITH) --- | | |
| A | GB-A-1 530 451 (BPB INDUSTRIES) --- | | |
| A,D | FR-A-2 395 965 (S.K.W.) --- | | |
| E | WO-A-8 805 423 (US GYPSUM) * En entier * ----- | 1-22 | |

DOMAINES TECHNIQUES RECHERCHES (Int. Cl.4)

C 01 F 11/00
C 04 B 14/00

Le présent rapport a été établi pour toutes les revendications

| Lieu de la recherche | Date d'achèvement de la recherche | Examinateur |
|---|---|---|
| LA HAYE | 07-06-1989 | ZALM W.E. |